# EUROPEAN PATENT SPECIFICATION

(11) **EP 2 018 413 B1**
(45) Date of publication and mention of the grant of the patent: **06.09.2017**
(21) Application number: 07758371.4
(22) Date of filing: 12.05.2007
(51) Int. Cl.: C09K 5/04

(54) **MIXED GAS REFRIGERANTS**
MISCHGASKÄLTEMITTEL
RÉFRIGÉRANTS GAZEUX MIXTES

(30) Priority: 13.03.2006 US 374806
(43) Date of publication of application: 28.01.2009
(73) Proprietor: Raytheon Company, Waltham, MA 02451-1449 (US)
(72) Inventor: SOBEL, Lawrence, Tucson, AZ 85716-5337 (US)
(74) Representative: Jackson, Richard Eric
(86) International application number: PCT/US2007/063815
(87) International publication number: WO 2007/133836

(56) References cited:
- EP-A1- 0 271 989
- FR-A- 1 465 540
- US-A- 5 193 349
- US-A- 5 579 654
- US-A1- 2002 134 530
- US-A1- 2005 253 107
- US-B1- 6 438 994
- US-B1- 6 523 366
- US-B2- 6 502 410

## Description

### FIELD OF INVENTION

The present invention generally concerns refrigerants; and more particularly, representative and exemplary embodiments of the present invention generally relate to mixed gas refrigerants for use below 77 K.

### BACKGROUND OF INVENTION

Freon-type pure gases have been generally used in closed-cycle refrigeration systems operating within household and commercial refrigeration temperature regimes. More recently, mixed gases (frequently utilizing Freon as one of the constituent components) have also been employed. Such consumer-level refrigeration systems typically employ equipment that is suitably adapted to operate within desired pressure ratios and temperature ranges.

When operating cooling systems in cryogenic temperature regimes, condensed phase refrigerants having normal boiling point temperatures below 120K (e.g., nitrogen, helium, methane, and the like) have been used. These cryogenic gases have ordinarily required the use of high pressure gas systems involving multi-stage compressors or high pressure oil-less compressors. Accordingly, these systems have become more expensive to manufacture and operate, and require frequent maintenance.

In order to provide cryogenic systems which are less costly and more efficient, there have been mixed gas refrigerants proposed for use within cryogenic temperature ranges. Many such mixed gas systems have been proposed. These typically combine conventional and well-known cryogenic refrigerants with various hydrocarbons, including methane, ethane, propane, and isobutene, in various combinations.

U.S. 5,441,658 to Boyarsky et al. discloses mixed gas refrigerants consisting of mixtures of 30-50% by molar weight of nitrogen combined with at least some, but less than 20% methane by mole fraction, at least 30% propane by mole fraction, and enough ethane or ethylene to balance the mixture. Russian Patent No. 627,154 suggests a mixed gas refrigerant combining nitrogen with various hydrocarbons (*e.g*., 25-40% nitrogen by molar weight, 20-35% methane by molar weight, 15-35% ethane by molar weight, and 25-45% propane by molar weight. Another reference which has suggested a combination of the same ingredients, but in different proportions, is U.K. Patent No. 1 ,336,892.

U.S. 6,438,994B1 describes a method for generating refrigeration using a turboexpander or reverse Brayton cycle which can more efficiently generate refrigeration especially to cryogenic temperatures using a defined refrigeration mixture containing argon and/or nitrogen.

There are numerous combinations of conventional cryogenic refrigerants. The existing systems, however, are generally only suitable for operation above about 80K.

Conventional cryogenic fluids with normal boiling points above about 80K generally include: N₂, air, CO, F, Ar, O₂, CH₄, Kr, R14, O₃, Xe, C₂H₄, BF₃, N₂O, C₂H₆, HCl, C₂H₂, CHF₃, 1,1-C₂H₂F₂, R13, CO₂, Rn, C₃H₈, C₄H₁₀. and C₅H₁₂. Those with normal boiling points below about 27K generally include ³He, ⁴He, H₂, ²H, ³H, and Ne. For cryogenic applications between 27K and 80K, none of these pure compounds provide a suitable condensed phase normal boiling point temperature.

### SUMMARY OF THE INVENTION

In various representative aspects, the present invention discloses multi-component gas mixtures suitably adapted to provide condensed phase cryogenic refrigerants with normal boiling points below 80K as defined by claim1. Exemplary gas mixture components typically include: 19-40% argon and 20.1-80.5% neon. The disclosed multi-component gas mixtures may be suitably adapted (with varying component mass ratios) for operation between about 27K (100% Neon) and about 80K (0% Neon).

Advantages of the present invention will be set forth in the Detailed Description which follows and may be apparent from the Detailed Description or may be learned by practice of exemplary embodiments of the invention. Still other advantages of the invention may be realized by means of any of the instrumentalities, methods or combinations particularly pointed out in the claims.

### DETAILED DESCRIPTION OF EXEMPLARY EMBODIMENTS

The following representative descriptions of the present invention generally relate to exemplary embodiments and the inventor's conception of the best mode, and are not intended to limit the scope, applicability or configuration of the invention in any way. Rather, the following description is intended to provide convenient illustrations for implementing various embodiments of the invention. As will become apparent, changes may be made in the function and/or arrangement of any of the elements described in the disclosed exemplary embodiments without departing from the invention as defined by the claims.

A detailed description of a representative multi-component gas mixture is provided as a specific enabling disclosure that may be generalized to any operational embodiment of the disclosed invention.

In a representative embodiment, approximately 19% Ar by molar weight is combined and/or balanced with Ne. The resulting multi-component mixture has a normal boiling point temperature of approximately 49° K.

In another representative embodiment, approximately 40% by molar weight Ar is combined and/or balanced with Ne. The resulting multi-component mixture has a normal boiling point temperature of approximately 60° K.

In the foregoing specification, the invention has been described with reference to specific exemplary embodiments; however, it will be appreciated that various modifications and changes may be made without departing from the scope of the present invention as set forth in the claims below. The specification is to be regarded in an illustrative manner, rather than a restrictive one and all such modifications are intended to be included within the scope of the present invention. Accordingly, the scope of the invention should be determined by the claims appended hereto.

Benefits, other advantages and solutions to problems have been described above with regard to particular embodiments; however, any benefit, advantage, solution to problem or any element that may cause any particular benefit, advantage or solution to occur or to become more pronounced are not to be construed as critical, required or essential features or components of any or all the claims.

As used herein, the terms "comprising", "having", "including" or any contextual variant thereof, are intended to reference a non-exclusive inclusion, such that a process, method, article, composition or apparatus that comprises a list of elements does not include only those elements recited, but may also include other elements not expressly listed or inherent to such process, method, article, composition or apparatus. Other combinations and/or modifications of the above-described structures, arrangements, applications, proportions, elements, materials or components used in the practice of the present invention, in addition to those not specifically recited, may be varied or otherwise particularly adapted to specific environments, manufacturing specifications, design parameters or other operating requirements without departing from the general principles of the same.

## Claims

1. A mixed gas composition suitably adapted to provide a condensed phase refrigerant having a normal boiling point below about 80° K and above about 27° K, said composition consisting essentially of: Ar and Ne, wherein the molar weight fraction of Ar ranges from 19% to 40%.

2. The mixed gas composition according to claim 1, wherein the molar weight fraction of Ar is 19% and the balance is Ne.

3. The mixed gas composition according to claim 1, wherein the molar weight fraction of Ar is 40% and the balance is Ne.

4. A method for providing a condensed phase refrigerant having a normal boiling point below about 80° K and above about 27° K, said method comprising the step of providing a mixed gas consisting essentially of Ar and Ne, wherein the molar weight fraction of Ar ranges from 19% to 40%.

5. The method according to claim 4, wherein the molar weight fraction of Ar is 19% and the balance is Ne.

6. The method according to claim 4, wherein the molar weight fraction of Ar is 40% and the balance is Ne.

## Patentansprüche

1. Mischgaszusammensetzung, die dafür geeignet ist, ein sich in einer kondensierten Phase befindendes Kältemittel bereitzustellen, das einen normalen Siedepunkt unterhalb von etwa 80 °K und oberhalb von etwa 27 °K aufweist, wobei die Zusammensetzung im Wesentlichen aus Ar und Ne besteht, wobei der Molgewichtsanteil von Ar von 19 % bis 40 % reicht.

2. Mischgaszusammensetzung nach Anspruch 1, wobei der Molgewichtsanteil von Ar 19 % beträgt und der Rest aus Ne besteht.

3. Mischgaszusammensetzung nach Anspruch 1, wobei der Molgewichtsanteil von Ar 40 % beträgt und der Rest aus Ne besteht.

4. Verfahren zum Bereitstellen eines sich in einer kondensierten Phase befindenden Kältemittels, das einen normalen Siedepunkt unterhalb von etwa 80 °K und oberhalb von etwa 27 °K aufweist, wobei beim Verfahren ein Mischgas bereitgestellt wird, das im Wesentlichen aus Ar und Ne besteht, wobei der Molgewichtsanteil von Ar von 19 % bis 40 % reicht.

5. Verfahren nach Anspruch 4, wobei der Molgewichtsanteil von Ar 19 % beträgt und der Rest aus Ne besteht.

6. Verfahren nach Anspruch 4, wobei der Molgewichtsanteil von Ar 40 % beträgt und der Rest aus Ne besteht.

## Revendications

1. Composition de gaz mixte conformément adaptée pour produire un réfrigérant à phase condensée ayant un point d'ébullition normal inférieur à environ 80 °K et supérieur à environ 27 °K, ladite composition étant essentiellement constituée de : Ar et Ne, dans laquelle la fraction en poids molaire de Ar est dans la plage de 19 % à 40 %.

2. Composition de gaz mixte selon la revendication 1, dans laquelle la fraction en poids molaire de Ar est de 19 % et le complément est Ne.

3. Composition de gaz mixte selon la revendication 1, dans laquelle la fraction en poids molaire de Ar est de 40 % et le complément est Ne.

4. Procédé de production d'un réfrigérant à phase condensée ayant un point d'ébullition normal inférieur à environ 80 °K et supérieur à environ 27 °K, ledit procédé comprenant l'étape de fourniture d'un gaz mixte essentiellement constitué de Ar et Ne, dans lequel la fraction en poids molaire de Ar est dans la plage de 19 % à 40 %.

5. Procédé selon la revendication 4, dans lequel la fraction en poids molaire de Ar est de 19 % et le complément est Ne.

6. Procédé selon la revendication 4, dans lequel la fraction en poids molaire de Ar est de 40 % et le complément est Ne.
